Europäisches Patentamt

European Patent Office

Office européen des brevets

(11) Veröffentlichungsnummer: **0 452 562 A1**

# EUROPÄISCHE PATENTANMELDUNG

(21) Anmeldenummer: 90125052.2

(22) Anmeldetag: **20.12.90**

(51) Int. Cl.⁵: **H01F 7/18**

(30) Priorität: **18.04.90 DE 4012353**

(43) Veröffentlichungstag der Anmeldung:
**23.10.91 Patentblatt 91/43**

(84) Benannte Vertragsstaaten:
**DE FR GB IT**

(71) Anmelder: **LUCAS INDUSTRIES PUBLIC LIMITED COMPANY**
**Brueton House, New Road**
**Solihull, West Midlands B91 3TX(GB)**

(72) Erfinder: **Staufenbiel, Detlef**
**Glismuotstrasse 12**
**W-5400 Koblenz(DE)**

(74) Vertreter: **von Hellfeld, Axel, Dipl.-Phys. Dr. et al**
**Wuesthoff & Wuesthoff Patent- und Rechtsanwälte Schweigerstrasse 2**
**W-8000 München 90(DE)**

(54) Schaltung zum Betätigen von zwei Elektromagnetventilen.

(57) Eine Schaltung zum Betätigen von zwei Elektromagnetventilen mit jeweils einer Spule weist Freilaufdioden D1, D2 zum Abbauen der in den Spulen gespeicherten Energien auf. Zur Einsparung von Bauteilen und zur Ermöglichung einer platzsparenden Schaltung ist vorgesehen, daß die Freilaufdioden beider Spulen an einen gemeinsamen Transistor T1 angeschlossen sind, der für beide Spulen einen Freilaufkreis bildet.

Fig. 2

Die Erfindug betrifft eine Schaltung zum Betätigen von zumindest zwei Elektromagnetventilen, die jeweils eine Spule aufweisen, in der bei einer Ventilbetätigung Energie gespeichert wird, mit Freilaufdioden zum Abbauen der in den Spulen gespeicherten Energien.

Bei bekannten Schlupf-Regelanlagen für Kraftfahrzeuge, wie insbesondere ABS-Anlagen, werden zur Bremsdruckregelung pro Rad zwei elektromagnetisch betätigbare Ventile verwendet. Die Ventile werden z.B. betätigt, um zur Vermeidung eines Blockierens der Räder den Bremsdruck gemäß einem ABS-Regelalgorithmus zu steuern.

Die Erfindung betrifft insbesondere solche Elektromagnetventile in Schlupf-Regelanlagen von Kraftfahrzeugen, die von einem Prozessor entsprechend einem Vergleich von gemessenen Radgeschwindigkeiten oder Drehverzögerungen mit Schwellenwerten gesteuert werden.

Es ist bekannt, bei solchen ABS-Anlagen pro Rad ein sogenanntes Halteventil und ein sogenanntes Abbauventil einzusetzen. Das Halteventil dient dazu, in der Bremse einen konstanten Druck zu halten, während das Abbauventil dazu dient, den Bremsdruck abzubauen. Diese Funktionen erfüllen die Ventile jeweils während ihrer Betätigungzeit, d.h. das Halteventil ist in stromlosem Zustand offen und das Abbauventil ist in seinem stromlosen Zustand geschlossen.

Es ist weiterhin bekannt, in ABS-Anlagen die genannten Elektromagnetventile mit sogenannten getakteten Endstufen zu betätigen. Die Spulen der Ventile werden dabei in ihrem Betriebszustand nicht kontinuierlich mit konstantem Strom beschickt, sondern getaktet betrieben. Die Taktung des Stromes erfolgt dabei so, daß zunächst ein relativ hoher Stromstoß (sogenannter Peakstrom) durch die Spule geschickt wird, um ein sicheres und schnelles Einleiten der Ventilbewegung zu erzielen, wonach der Strom dann um einen etwas geringeren Pegel pendelnd eingestellt wird. Dieser getaktete Haltestrom reduziert im Vergleich mit einem kontinuierlichen konstanten Strom die Leistungsaufnahme (Erhitzung) des Ventils und ermöglicht überdies ein schnelleres Schalten des Ventils. Die hierfür erforderlichen getakteten Endstufen zum Ansteuern der Ventilspulen sind als solches bekannt.

In den Spulen der Elektromagnetventile wird in den Betriebszuständen Energie gespeichert, die nach Beendigung des Stromflusses möglichst schnell abgebaut werden muß. Zum Abbauen von in Spulen gespeicherten Energien sind sogenannte Freilaufkreise mit Freilaufdioden bekannt.

Im Stand der Technik, insbesondere bei ABS-Anlagen mit zwei Elektromagnetventilen pro Rad für die Bremsdruckregelung, ist es bekannt, für jede der beiden Spulen der Ventile einen gesonderten Freilaufkreis mit jeweils einer Diode und einem Transistor vorzusehen. Solche Schaltungen zum Ansteuern von zwei Elektromagnetventilen sind aufgrund der Vielzahl der verwendeten Bauelemente, insbesondere der zwei erforderlichen Transistoren, teuer.

Der Erfindung liegt die Aufgabe zugrunde, eine Schaltung zum Betätigen von zumindest zwei Elektromagnetventilen zu schaffen, die kostengünstig herstellbar ist, einen geringen Platzbedarf hat und eine höhere Ausfallsicherheit aufgrund einer geringen Anzahl verwendeter Bauteile aufweist.

Erfindungsgemäß wird diese Aufgabe dadurch gelöst, daß die Freilaufdioden der beiden Elektromagnetventil-Spulen an einen gemeinsamen Transistor angeschlossen sind, um für die Spulen einen Freilaufkreis zu bilden, der je nach dem, aus welcher der beiden Spulen Energie abgebaut wird, eine der Dioden und den gemeinsamen Transistor enthält.

Mit anderen Worten, erfindungsgemäß werden nicht für beide Elektromagnetventil-Spulen jeweils gesonderte Freilaufkreise vorgesehen, die voneinander unabhängig sind, sondern für beide Spulen fließt der Energie-Abbaustrom über den gleichen Transistor, der Bestandteil beider Freilaufkreise für die Spulen ist.

Um einen möglichst schnellen Energieabbau zu ermöglichen, ist gemäß einer bevorzugten Ausgestaltung der erfindungsgemäßen Schaltung vorgesehen, daß mit denjenigen Bauelementen, welche die Freilaufkreise der beiden Elektromagnetventil-Spulen gemeinsam haben, zumindest zwei Zustände einstellbar sind, in denen der Energieabbau durchgeführt wird. Der erste Zustand entspricht einem relativ hohen Spannungsniveau und der zweite Zustand einem relativ niedrigen Spannungsniveau an der Spule. Gemäß einer bevorzugten Ausgestaltung der Erfindung wird der erste Zustand, bei dem die Energie der Spule bei relativ hohem Spannungsniveau abgebaut wird, dadurch realisiert, daß der Freilaufkreis mittels einer Zener-Diode geschaltet (durchgesteuert) wird. Der zweite Zustand, bei dem die Spulenenergie bei relativ niedrigem Spannungsniveau abgebaut wird, wird dadurch realisiert, daß der zugehörige Freilaufkreis mittels eines Transistors eingeschaltet wird.

Nachfolgend wird die Erfindung anhand der Zeichnung näher erläutert. Es zeigt:

Fig. 1 über einer gemeinsamen Zeitskala schematisch bei einer Betätigung eines Elektromagnetventils die Verläufe des Spulenstromes, die Ansteuerspannung für die Endstufe sowie die von der Endstufe durchgeführte Taktung des Spulenstromes;

Fig. 2 ein erstes Ausführungsbeispiel einer erfindungsgemäßen Schaltung zum Betätigen von zwei Elektromagnetventilen und

Fig. 3   ein zweites Ausführungsbeispiel einer erfindungsgemäßen Schaltung zum Betätigen von zwei Elektromagnetventilen.

Die nachfolgend beschriebenen Ausführungsbeispiele beziehen sich auf eine ABS-Anlage, bei der zur Bremsdruckregelung pro Rad zwei elektromagnetisch betätigbare Ventile eingesetzt werden, nämlich ein sogenanntes Halteventil H, welches stromlos offen ist, und ein Abbauventil A, welches stromlos geschlossen ist.

Bei einer solchen ABS-Anlage sind drei verschiedene Druckzustände zu unterscheiden, nämlich Druckaufbau, Druckhalten und Druckabbau.

Die folgende Tabelle zeigt für die beiden Ventile (Halteventil H und Abbauventil A) den jeweiligen Stromzustand, wobei das Symbol "0" bedeutet, daß das Ventil stromlos ist, während das Symbol "1" bedeutet, daß das Ventil bestromt wird.

## Tabelle:

| Druckzustand der Bremse | Ventil H | Ventil A |
|---|---|---|
| Aufbau | 0 | 0 |
| Halten | 1 | 0 |
| Abbau | 1 | 1 |

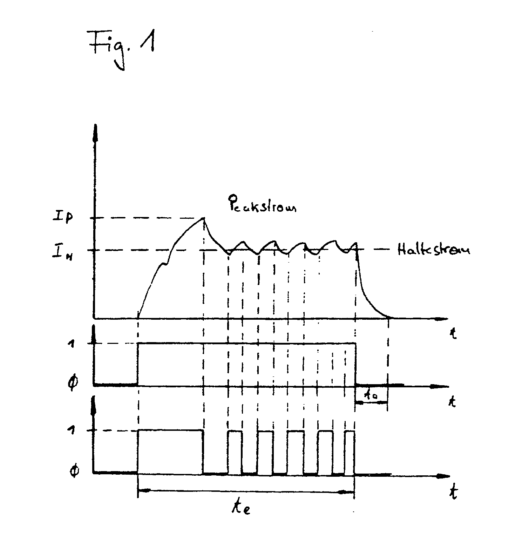

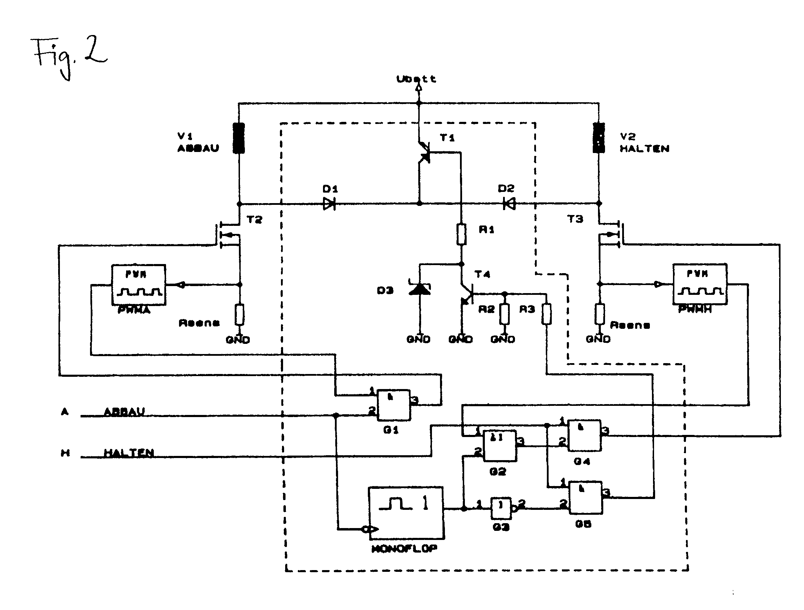

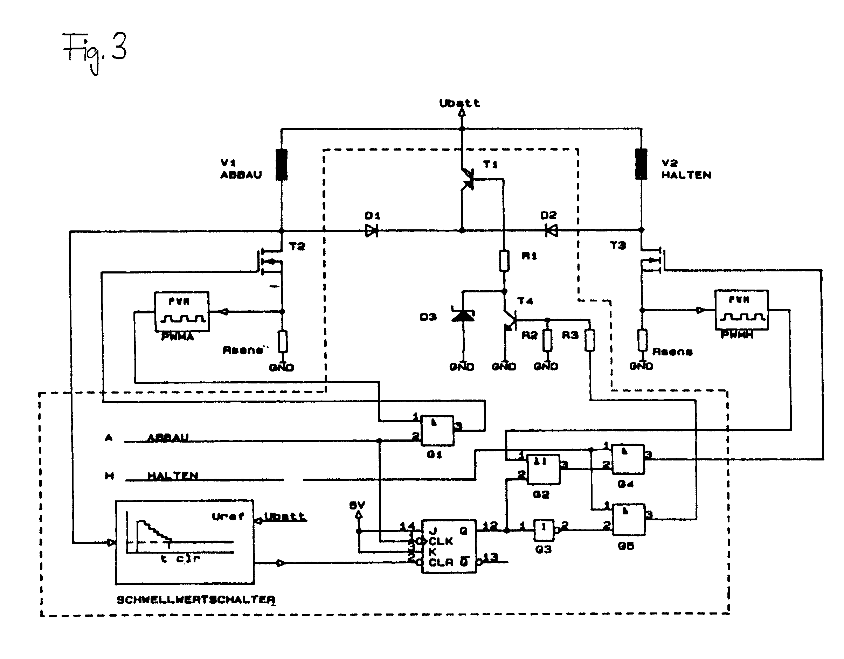

Fig. 1 zeigt im oberen Abschnitt schematisch den Verlauf des Stromes I bei einer Ventilbetätigung in Abhängigkeit von der Zeit t. Darunter ist die Ansteuerung der getakteten Endstufe (siehe Fig. 1 und 2, Bezugszeichen PWM) aufgetragen und darunter ist über der Zeit die von der Endstufe erzeugte Taktung aufgetragen. Insoweit gibt die Fig. 1 Stand der Technik wieder.

Zunächst erzeugt die getaktete Endstufe einen relativ hohen Peakstrom $I_P$, damit das Ventil sicher und schnell anzieht, wonach der Strom dann auf einen mittleren Haltestrom $I_H$ abgesenkt wird. Dies geschieht durch Takten der Endstufe während der Einschaltzeit $t_e$, d.h. der Betätigungszeitspanne des jeweiligen Ventils.

Die Fig. 2 und 3 zeigen Ausführungsbeispiele einer erfindungsgemäßen Schaltung zum Betätigen von zwei Elektromagnetventilen und insbesondere zum Abbauen der in den Spulen der Elektromagnetventile während einer Betätigung gespeicherten Energien. Die Abbauzeitspanne $t_a$ ist in Fig. 1 graphisch dargestellt. Es ist diejenige Zeitspanne, in der der Strom durch die Magnetventilspule vom Wert $I_H$ auf 0 abfällt. Diese Zeitspanne sollte möglichst kurz sein.

Bezüglich des Abbaus der in den Spulen gespeicherten Energien sind zwei Zustände zu unterscheiden. Zum einen der Abbau der Energie während einer Taktung (Zeitspanne $t_e$ in Fig. 1) und zum anderen der Abbau der Energie nach einem Abschalten der Ventilendstufe, d.h. nach Beendigung der Zeitspanne $t_e$ während der Zeitspanne $t_a$ (Fig. 1). Im ersteren Fall erfolgt der Energieabbau auf relativ niedrigem Spannungsniveau, um ein günstiges Puls-Pause-Verhältnis bei der Pulsierung des Haltestromes zu erreichen, während im zweiten Fall die Energie der Ventilspule möglichst schnell abgebaut werden soll, um eine kurze Abfallzeit $t_a$ zu erreichen, wobei der Energieabbau bei relativ hohem Spannungsniveau erfolgt.

Realisiert wird dies mit den in den Fig. 2 und 3 gezeigten Schaltungen.

Die Spulen der beiden Elektromagnetventile sind mit V1 und V2 bezeichnet, wobei die Spule V1 zum Abbauventil A (stromlos geschlossen) und die Spule V2 zum Halteventil H (stromlos offen) gehören.

Die Dioden $D_1$, $D_2$ sind sogenannte Freilaufdioden. Jeweils eine der Dioden ist einer der Spulen zur Bildung eines Freilaufkreises zum Energieabbau in der Spule zugeordnet. Die in den Figuren mit gestrichelter Linie eingerahmten Schaltungsteile stellen jeweils den Kern der Erfindung dar.

Eine Betriebsspannung $U_{batt}$ ist an beide Spulen V1, V2 zu einer Ventilbetätigung anlegbar. Hierzu werden jeweils zugehörige Transistoren T2, T3 durchgeschaltet.

Der Transistor T1 bildet für beide Spulen V1, V2 einen Freilaufkreis zum Energieabbau.

Während einer Taktungsphase wird beispielsweise die in der Ventilspule V1 auftretende Energie über einen Freilaufkreis aus der Diode D1 und dem Transistor T1 abgebaut. Dieser Freilaufkreis D1, T1 wird mittels eines Transistors T4 auf relativ niedrigem Spannungsniveau geschaltet (T4 durchgesteuert), um ein günstiges Puls/Pause-Verhältnis bei der Taktung des Ventils zu erreichen. Somit wird die Ventilspule V1 (für die andere Ventilspule V2 gilt entsprechendes) während der Zeitspanne $t_e$ gemäß Fig. 1 mittels des Transistors T4 geschaltet, um die Spulenenergie abzubauen.

Im Anschluß an die Zeitspanne $t_e$ wird der Freilaufkreis D1, T1 der Ventilspule V1 nicht vom Transistor T4 geschaltet, sondern mittels einer Zener-Diode D3. Beim Abschalten der Ventilendstufe ist es nämlich erforderlich, die Energie der Ventilspule schnellstmöglich abzubauen, um eine möglichst kurze Abfallzeit $t_a$ zu erreichen. Hierzu wird der Freilaufkreis D1, T1 mit gesperrtem Transistor T4 durchgesteuert, wenn an der Zener-Diode D3 die Zenerspannung erreicht ist, so daß die Energie in der Ventilspule bei relativ hohem Spannungsniveau, welches durch die Zenerspannung definiert ist, abgebaut wird.

Nachfolgend wird die Funktion der Schaltung nach Fig. 1 für die einzelnen Zustände gemäß obiger Tabelle erläutert:

1. Zustand Aufbau (siehe Tabelle)

Grundzustand; beide Ventile stromlos; keine Wirkung der Ansteuerschaltung

2. Zustand Halten

Im Zustand Halten ist der Steuereingang A auf 0-Signal. Über die UND-Verknüpfung G1 wird T2 gesperrt und das Abbauventil V1 ist stromlos, d.h. geschlossen. Der Ausgang des Monoflop liegt auf 0-Signal. Über den Inverter G3 erhält das UND-Gatter G5 an Pin 2 ein 1-Signal. Beim Schalten des Halteventils (H → 1) erhält das UND-Gatter G5 ebenfalls an Pin 1 ein 1-Signal und über den Ausgang 3 wird der Transistor T4 durchgesteuert. Über den Transistor T4 wird der Freilaufkreis D2, T1 eingeschaltet und die während der Haltephase durch die Taktung auftretende Energie im Halteventil V2 kann bei niedrigem Spannungsniveau (T4 durchgesteuert) abgebaut werden. Die Ansteuerung des Transistors T3 erfolgt durch die Regelschaltung PWMH (getaktete Endstufe) über die ODER-Verknüpfung G2 und die UND-Verknüpfung G4. Beim Abschalten des Zustandes Halten (H → 0) geht der Ausgang des UND-Gatters G5 auf 0-Signal und der Transistor T4 sperrt. Ebenfalls wird der Transistor T3 über das UND-Gatter G4 abgeschaltet. Die dabei entstehende Energie im Halteventil V2 wird über den Freilaufkreis D2, T1 bei hohem Spannungsniveau, gesteuert durch die Zener-Diode D3, abgebaut.

3. Zustand Abbau

Voraussetzung: $t_{mono} = t_a$

Im Zustand Abbau führen die Steuereingänge A und H ein 1-Signal. Die Stromregelung des Abbauventils erfolgt durch die Regelschaltung PWMA über das UND-Gatter G1 durch Takten des Transistors T2. Die Stromregelung des Halteventils erfolgt durch die Regelschaltung PWMH über das ODER-Gatter G2 und das UND-Gatter G4 durch Takten des Transistors T3. Der Ausgang des Monoflop führt 0-Signal. Über den Inverter G3 liegt Pin 2 des UND-Gatters G5 an 1-Signal. Der Transistor T4 ist durchgesteuert und der Freilaufkreis für das Abbauventil V1 wird über D1, T1 und der Freilaufkreis für das Halteventil V2 über D2, T1 gebildet.

3.1. Abbau → Halten

Beim Übergang vom Zustand Abbau nach Halten wird durch die negative Flanke des Steuersignals A das Monoflop getriggert. Der Ausgang des Monoflop führt für die Zeit $t_{mono} = t_a$ 1-Signal. Durch dieses 1-Signal wird über den Inverter G3 und das UND-Gatter G5 der Transistor T4 für die Zeit $t_{mono}$ gesperrt. Gleichzeitig wird durch das 1-Signal am Ausgang des Monoflop über das ODER-Gatter G2 und das UND-Gatter G4 die Taktung durch die Regelschaltung PWMH unterdrückt und der Transistor T3 durchgesteuert.

In der Zeit $t_{mono}$ wird die Energie des Abbauventils V1 über den Freilaufkreis D1, T1 bei hohem Spannungsniveau, gesteuert durch die Zener-Diode D3, abgebaut. Nach Ablauf der Zeit $t_{mono}$ führt der Ausgang des Monoflop 0-Signal. Hierdurch wird über das ODER-Gatter G2 und das UND-Gatter G4 die Stromregelung des Halteventils V2 über PWMH und den Transistor T3 wieder freigegeben.

Gleichzeitig wird über den Inverter G3 und das UND-Gatter G5 der Transistor T4 durchgesteuert, so daß während der Taktphase die Energie des Halteventils V2 auf niedrigem Spannungsniveau abgebaut werden kann.

3.2 Abbau → Halten

Beim Übergang vom Zustand Abbau nach Aufbau wird durch das UND-Gatter G1 der Transistor T2 sowie durch das UND-Gatter G4 der Transistor T3 gesperrt.

Gleichzeitig geht der Ausgang des UND-Gatters G5 auf 0-Signal und der Transistor T4 sperrt. Die Energie des Abbauventils V1 wird über D1, T1 und die Energie des Halteventils V2 wird über D2, T1 bei hohem Spannungsniveau abgebaut, jeweils gesteuert durch die Zener-Diode D3.

4

EP 0 452 562 A1

Fig. 3 beschreibt eine Abwandlung der vorstehend beschriebenen Schaltung. Hier wird anstelle des die Abschaltzeit $t_a$ nachbildenden Monoflop über eine Rückkopplung der am Abbauventil V1 entstehenden Indukionsspannung der zeitliche Verlauf des Schaltverhaltens gesteuert. Beim Übergang vom Zustand Abbau nach Halten wird durch die negative Flanke des Steuersignals A das J-K-Flipflop getriggert und der Ausgang Q geht auf 1-Signal. Über den Inverter G3 und das UND-Gatter G5 wird der Transistor T4 gesperrt. Gleichzeitig wird durch das 1-Signal am Ausgang des Flipflop über das ODER-Gatter G2 und das UND-Gatter G4 die Taktung durch die Regelschaltung PWMH unterdrückt und der Transistor T3 durchgesteuert. Die durch das Abschalten des Abbauventils entstehende Energie wird über den Freilaufkreis D1, T1 bei hohem Spannungsniveau, gesteuert durch die Zener-Diode D3, abgebaut. Der Verlauf der dabei entstehenden Induktionsspannung am Drain des Transistors T2 wird über den Schwellenwertschalter überwacht. Zum Zeitpunt $t_{clr}$ wird das Flipflop vom Schwellenwertschalter zurückgesetzt. Der Ausgang Q des Flipflop geht auf 0-Signal. Hiedurch wird über das ODER-Gatter G2 und das UND-Gatter G4 die Stromregelung des Halteventils V2 über PWMH und den Transistor T3 wieder freigegeben. Gleichzeitig wird über den Inverter G3 und das UND-Gatter G5 der Transistor T4 durchgesteuert, so daß während der Taktphase die Energie des Halteventils V2 auf niedrigem Spannungsniveau abgebaut werden kann.

Die vorstehend beschriebenen Schaltungen haben gegenüber dem Stand der Technik den Vorteil, daß der Aufwand an Bauteilen für die Freilaufkreise reduziert ist, daß eine Platzeinsparung bezüglich der Schaltung möglich ist und daß aufgrund der reduzierten Anzahl von Bauteilen eine höhere Sicherheit gegen Ausfälle gewährleistet ist.

## Patentansprüche

1. Schaltung zum Betätigen von zumindest zwei Elektromagnetventilen, die jeweils eine Spule ($V_1$, $V_2$) aufweisen, in der bei einer Ventilbetätigung Energie gespeichert wird, mit Freilaufdioden ($D_1$, $D_2$) zum Abbauen der in den Spulen ($V_1$, $V_2$) gespeicherten Energien,
dadurch **gekennzeichnet**, daß die Freilaufdioden ($D_1$, $D_2$) der beiden Spulen ($V_1$, $V_2$) an einen gemeinsamen Transistor ($T_1$) angeschlossen sind, um für die Spulen ($V_1$, $V_2$) jeweils einen Freilaufkreis zu bilden, der eine der Dioden ($D_1$ bzw. $D_2$) und den gemeinsamen Transistor ($T_1$) enthält.

5

Fig. 1

Peakstrom

$I_P$

$I_H$            Haltestrom

$t$

1

$\phi$         $t_a$

$t$

1

$\phi$

$t$

$t_e$

Fig. 2

Fig. 3

**Europäisches**
**Patentamt**

# EUROPÄISCHER
# RECHERCHENBERICHT

Nummer der Anmeldung

## EP 90 12 5052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 020 193   (THE BENDIX CORP.)<br>* Seite 5, Zeilen 9-13; Seite 6, Zeilen 26-38; Figur 1 *<br>– – – | 1 | H 01 F 7/18 |
| Y | US-A-3 705 333   (GALETTO et al.)<br>* Spalte 3, Zeilen 1-40; Figur 3 *<br>– – – | 1 | |
| A | EP-A-0 298 737   (DIESEL KIKI)<br>* Spalte 1, Zeilen 13-23; Spalte 2, Zeile 14 - Spalte 3, Zeile 11; Figur 3 *<br>– – – – – | 1 | |

| | RECHERCHIERTE SACHGEBIETE (Int. Cl.5) |
|---|---|
| | H 01 F |

Der vorliegende Recherchenbericht wurde für alle Patentansprüche erstellt

| Recherchenort | Abschlußdatum der Recherche | Prüfer |
|---|---|---|
| Den Haag | 31 Juli 91 | MARTI ALMEDA R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                                 

& : Mitglied der gleichen Patentfamilie, übereinstimmendes Dokument